# EUROPÄISCHE PATENTSCHRIFT

(11) **EP 1 963 214 B1**
(45) Veröffentlichungstag und Bekanntmachung des Hinweises auf die Patenterteilung: **02.11.2011**
(21) Anmeldenummer: 06829638.3
(22) Anmeldetag: 15.12.2006
(51) Int. Cl.: B65G 47/08

(54) **UMSETZVERFAHREN UND UMSETZEINRICHTUNG FÜR STÜCKGÜTER, INSBESONDERE FLASCHEN**
TRANSFER METHOD AND APPARATUS FOR TRANSFERRING ARTICLES, IN PARTICULAR BOTTLES
PROCEDE DE DÉPLACEMENT ET DISPOSITIF DE DÉPLACEMENT DE PIECES ET EN PARTICULIER DE BOUTEILLES

(30) Priorität: 19.12.2005 DE 202005019907 U
(43) Veröffentlichungstag der Anmeldung: 03.09.2008
(73) Patentinhaber: AUTEFA automation GmbH, 86316 Friedberg (DE)
(72) Erfinder: ASAM, Hubert, 86453 Dasing (DE)
(74) Vertreter: Ernicke, Hans-Dieter
(86) Internationale Anmeldenummer: PCT/EP2006/012088
(87) Internationale Veröffentlichungsnummer: WO 2007/073882

(56) Entgegenhaltungen:
- EP-A1- 0 485 937
- EP-A1- 0 550 114
- EP-A1- 0 959 002
- EP-A1- 0 994 025
- EP-A1- 1 153 859
- DE-U1- 20 108 401
- FR-A1- 2 909 365
- US-A- 4 768 642
- US-A- 5 551 550
- US-A1- 2004 084 283
- US-A1- 2005 262 802

## Beschreibung

Die Erfindung betrifft ein Umsetzverfahren und eine Umsetzeinrichtung für Stückgüter, insbesondere für Flaschen, mit den Merkmalen im Oberbegriff des Verfahrens- und Vorrichtungshauptanspruchs.

Die EP 0 485 937 A1 offenbart eine Umsetzeinrichtung gemäß dem oberbegriff des Anspruchs 1 und eine Behandlungsanlage gemäß dem oberbegriff des Anspruchs 14. Dieses Dokument offenbart eine Umsetzeinrichtung für Flaschen mit einem Einpacker, der mit einem Packkopf abgetrennte Flaschengruppen greift und in Flaschenkästen einsetzt. Die Flaschen werden auf einem Transporteur zugeführt, der einen Strangförderer in Form von Scharnierbandketten aufweist. Eine Gruppiereinrichtung unterteilt den dicht gepackten Flaschenstrom auf den Scharnierbandketten in einzelne Gruppen. Sie weist eine unterhalb umlaufende Kette mit mehreren Gruppierfingern auf, die vor und hinter die abzutrennende Flaschengruppe greifen.

Aus der US 5,551,550 A ist ein Flaschensammler mit Roboter und Greifeinrichtung sowie einer Übersetzzone und einer Abstelleinrichtung bekannt. Die EP 0 994 025 A1 lehrt eine als Schnecke ausgebildete Stauvorrichtung.

Die EP 1 153 859 A1 befasst sich mit einer Einrichtung zur Herstellung vorgegebener Abstände in einem Förderstrom von einzelnen Gütern ohne dass die Güter dabei geklemmt werden. Die auf einem Bandförderer transportierten Güter werden dabei mittels seitlicher umlaufender Riemen mit Profilstücken hintergriffen und gegenüber dem Bandförderer zur Abstandsbildung beschleunigt oder gebremst.

Aus der DE 201 08 401 U1 ist ein Umsetzer für Flaschenbehandlungsanlagen bekannt, der die von einem Förderer in einem Strang kontinuierlich transportierten Flaschen auf stationäre Trays umsetzt. Der Roboter synchronisiert sich mit dem Flaschenförderer und greift die umzusetzende Flaschenreihe während ihres Transports. Mit dieser Technik ist ein Umsetzen von Flaschen aus dem laufenden Strang auf stationäre Trays, aber kein umgekehrter Umsetzvorgang möglich. Außerdem braucht der Umsetzer zum Synchronisieren und stückweisen Mitbewegen mit den Flaschen eine entsprechende Kinematik.

Die US 2005/262802 A1 und die parallele EP 1 595 797 A2 befassen sich mit einer Verpackungsmaschine und einem Zuführverfahren für Behälter. Die auf einem langen Strangförderer oder Zuführförderband in einem Strang in Förderrichtung zugeführten oben offenen Behälter werden an ein zweites Förderband übergeben und dort durch einzeln steuerbare Stopper, die als Anschläge wirken, gruppiert. Das zweite Förderband ist gerade so lang wie diese Behältergruppe. Die Behältergruppe wird anschließend mit den Stoppern in Förderrichtung weiter geschoben auf eine gelochte Aufnahmeplatte, wobei die entsprechend des Lochabstands durch die Stopper distanzierten und positionierten Behälter in die Plattenöffnungen fallen. Die Aufnahmeplatte wird durch einen Transportmechanismus mit den Behältern aus der Aufnahmeposition zu einer Verschließvorrichtung und einer dortigen zweiten Position für das Anschweißen einer Deckelfolie und anschließend wieder zurück zur ersten Position gebracht. Zwei Aufnahmeplatten werden dabei im Wechsel bewegt, wobei die Behälter während des Transports und der Deckelschweißung in den Aufnahmeplatten bleiben. Aus der ersten Position werden die verschlossenen Behälter in Förderrichtung auf einem dritten Förderer abtransportiert.

Es ist Aufgabe der vorliegenden Erfindung, eine andere Umsetztechnik aufzuzeigen.

Die Erfindung löst diese Aufgabe mit den Merkmalen im Verfahrens- und Vorrichtungshauptanspruch.
Die beanspruchte Stautechnik mit dem Umsetzverfahren und der Stauvorrichtung hat den Vorteil, dass durch das umsetzgerechte Bilden und Bereitstellen von Pulks aus Stückgütern oder Flaschen ein Umsetzer mit einer einfachen Kinematik eingesetzt werden kann. Im einfachsten Fall kann dies ein konventioneller Portalroboter mit einer Quertraverse und einer heb- und senkbaren Greifeinrichtung sein.

Die Stauvorrichtung selbst erfordert wenig Bauaufwand und lässt sich neben dem Strang anordnen. Die Stauvorrichtung ist außerdem flexibel und lässt sich auf verschiedene Größen von Güterpulks einstellen und zudem an die Fördergeschwindigkeiten der Flaschen im Strang anpassen. Mit der Stauvorrichtung können die Güterpulks mit eigenständiger Kinematik und insbesondere mit höherer Geschwindigkeit gegenüber dem Stauförderer bewegt und angetrieben werden.

Die beanspruchte Umsetzeinrichtung ist universeller als vorbekannte Einrichtungen einsetzbar. Sie erlaubt eine umgekehrte Umsetzkinematik, bei der Stückgüter, insbesondere Flaschen in einen laufenden Strang zurückgebracht und eingeschleust werden. Mit der Stauvorrichtung können zu diesem Zweck geeignete Lücken im laufenden Strang gebildet werden. Bei der beanspruchten Umsetzeinrichtung können außerdem die Betriebsmodi und die Kinematiken zwischen Umsetzen aus dem laufenden Strang und zurück in den laufenden Strang beliebig umgeschaltet werden. Alternativ ist die Anordnung der Umsetzeinrichtung an einem schaltbaren Bypass der Flaschen-Förderstrecke möglich.

Die Umsetzeinrichtung kann mit einer stationären Ladeanordnung zusammenwirken, bei der z.B. die Umsetzung auf Trays erfolgt, die z.B. stationär in einer Ladeposition bereitgehalten werden. Alternativ kann die Umsetzung auf eine instationäre oder bewegliche Ladeanordnung, z.B. auf vorbeibewegte Trays oder auf einen Strangförderer oder dergl. erfolgen. Die beanspruchte Umsetzeinrichtung ist multifunktional einsetzbar.

Die Stauvorrichtung kann in beliebig geeigneter Weise ausgebildet sein. Mit mehreren in den Strang einbringbaren Haltern werden je nach Betriebsmodus die vorderste und ggf. auch die hinterste Flasche im Flaschenpulk gefasst, so dass hierüber der Flaschenpulk gebildet, gegen den laufenden Strang abgegrenzt und zum eigenständigen Transportieren und Positionieren in der Umsetzposition relativ zum laufenden Strangförderer bewegt werden kann. Die Halter sind hierzu vorzugsweise als blatt- oder fingerförmige Mitnehmer ausgebildet, die zwischen die Flaschen im Strang greifen können. Eine der Stauvorrichtung vorgeschaltete Vereinzelungsvorrichtung kann für einen gegenseitigen Abstand der Flaschen im Strang und für bessere Eingriffsbedingungen sorgen. Die Halter werden mittels einer Transportvorrichtung reversierend oder umlaufend bewegt, wobei die Transportvorrichtung in beliebig geeigneter Weise ausgebildet sein kann. Der beanspruchte umlaufende Bandförderer ist eine besonders einfache und leicht zu steuernde konstruktive Ausgestaltung. Insbesondere kann mit einer Masterachse gearbeitet werden.

Für die umgekehrte Umsetzkinematik mit dem Einschleusen von Stückgütern, insbesondere Flaschen in einen laufenden Strang ist die Anordnung einer Abstelleinrichtung zur temporären Aufnahme einer umzusetzenden Stückgutreihe von Vorteil. Dies ermöglicht die Bildung und das Umsetzen von kompletten Reihen oder Teilreihen und die optimale Anpassung an die bestehenden kinematischen Bedingungen auf dem Strangförderer und die erreichbaren Lückengrößen. Ein Förderer an der Abstelleinrichtung hat den Vorteil, dass die umzusetzende Teilreihe immer an der gleichen Stelle bereit gestellt wird, wobei diese Stelle kinematisch günstig für die Lückenbildung im laufenden Strang und für die Umsetzkinematik liegt. Auf zusätzliche Fahrachsen am Reihenumsetzer kann dadurch auf Wunsch verzichtet werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine schematische Draufsicht auf eine Flaschenbehandlungsanlage mit einem Traylager und einer Umsetzeinrichtung,
- Figur 2:: eine vergrößerte und abgebrochene Draufsicht auf eine Stauvorrichtung in der Umsetzeinrichtung,
- Figur 3:: eine Seitenansicht der Stauvorrichtung gemäß Pfeil III von Figur 2,
- Figur 4 bis 8:: einen Umsetzvorgang von einer Flaschenreihe aus dem laufenden Strang auf einen Tray in mehreren Funktionsschritten,
- Figur 9 bis 12:: einen umgekehrten Umsetzvorgang von einer Flaschenreihe aus einem Tray in einen laufenden Strang in mehreren Funktionsschritten und
- Figur 13:: eine schematische Draufsicht auf eine Variante einer Flaschenbehandlungsanlage.

Die Erfindung betrifft ein Umsetzverfahren und eine Umsetzeinrichtung (1) für Stückgüter (2), die von beliebiger Art sein können. Zum Beispiel handelt es sich hierbei um Flaschen, insbesondere Kunststoffflaschen aus PET oder einem anderen Material. Die Erfindung betrifft außerdem eine Flaschenbehandlungsanlage (4), die mit ein oder mehreren solcher Umsetzeinrichtungen (1) ausgerüstet ist.

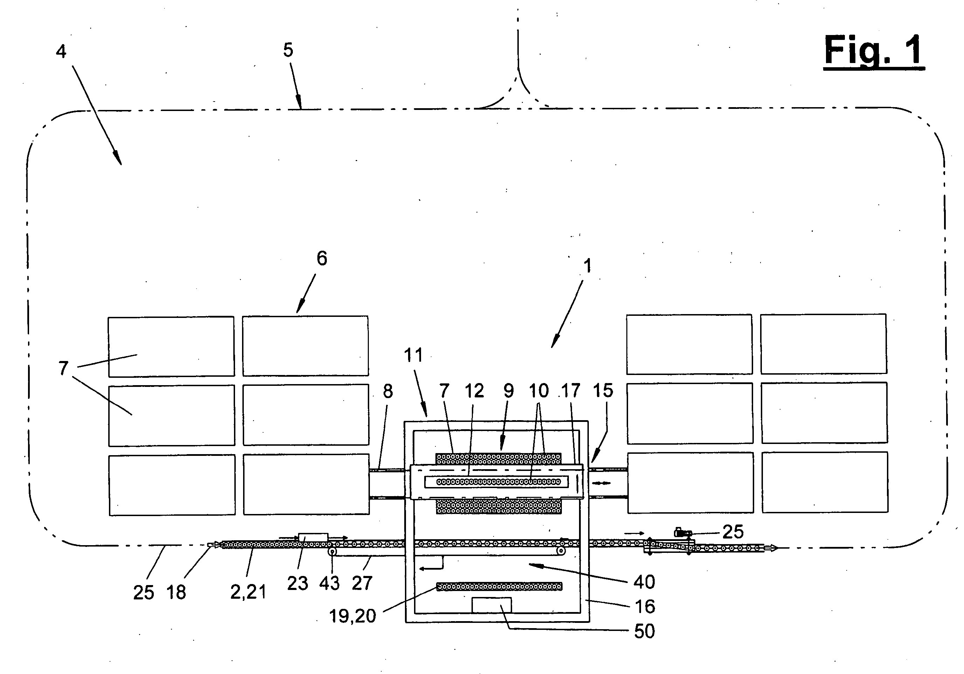

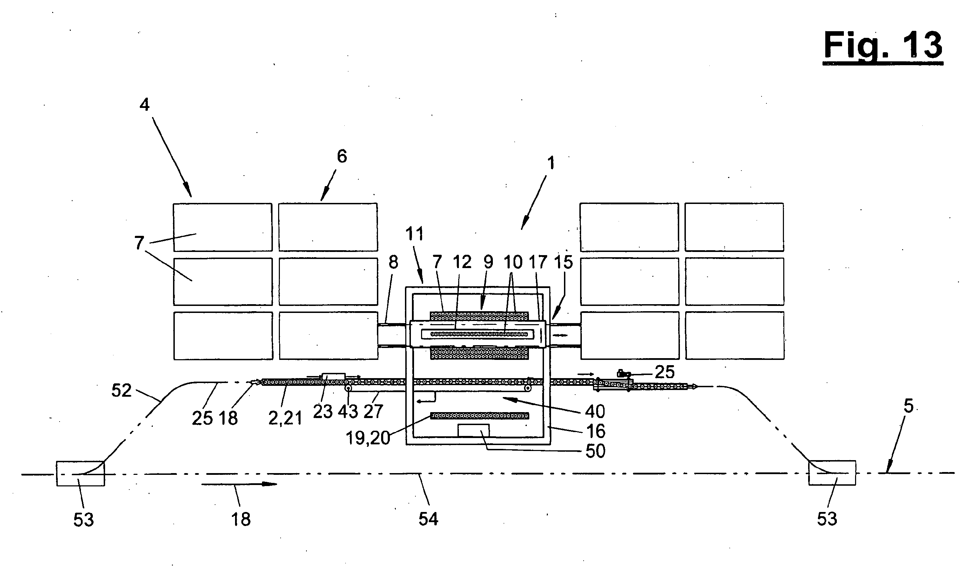

Figur 1 und 13 zeigen in einer schematischen Draufsicht ausschnittsweise eine Behandlungsanlage (4) mit einer Umsetzeinrichtung (1) zum Umsetzen von Flaschen (2). Die nachfolgend erläuterten Kinematiken und konstruktiven Ausgestaltungen der Umsetzeinrichtung (1) sind auf das Umsetzen von Flaschen (2) ausgelegt. Für das Umsetzen anderer Arten von Stückgütern werden die Einrichtungskomponenten entsprechend geändert und angepasst. Die nachfolgenden Erläuterungen gelten mit entsprechenden Anpassungen für alle Arten von Stückgütern (2).

Die Flaschen (2) werden auf einem Strangförderer (25) in einem Strang (21) auf einer offenen oder geschlossenen Förderbahn (5) kontinuierlich transportiert. Alternativ können mehrere parallele Strangförderer (25) mit mehreren Strängen (21) oder ein Strangförderer (25) mit mehreren parallelen Strängen (21) vorhanden sein. Der oder die Strangförderer (25) ist/sind z.B. als Bandförderer ausgebildet, auf dem die Flaschen (2) stehend transportiert werden und während des Transports mit einer geeigneten Führung (26) gegen seitliches Umfallen gesichert sind. Alternativ zu Bandförderern können beliebige andere Arten von vorzugsweise kontinuierlichen Förderern eingesetzt werden, die Flaschen (4) in einer greifbaren Position transportieren. In der gezeigten Ausführungsform erstreckt sich der Strangförderer (25) durch die Umsetzeinrichtung (1) hindurch und kann am Bahnende eine Weiche zur Umleitung der Flaschen (4) auf einen anderen Förderer haben.

In der Flaschenbehandlungsanlage (4) werden die Flaschen (2) in einer z.B. kreisförmigen Förderbahn (5) mit geeigneten Fördermitteln transportiert und können über Weichen in andere Anlagenbereiche, z.B. zu einer Fülleinrichtung, einer Palettiervorrichtung oder dergl. ausgelenkt werden. Umkehrt können auch Flaschen (2) in die Förderbahn (5) eingeschleust werden. Der Strangförderer (25) kann Bestandteil dieser Förderbahn (5) sein.

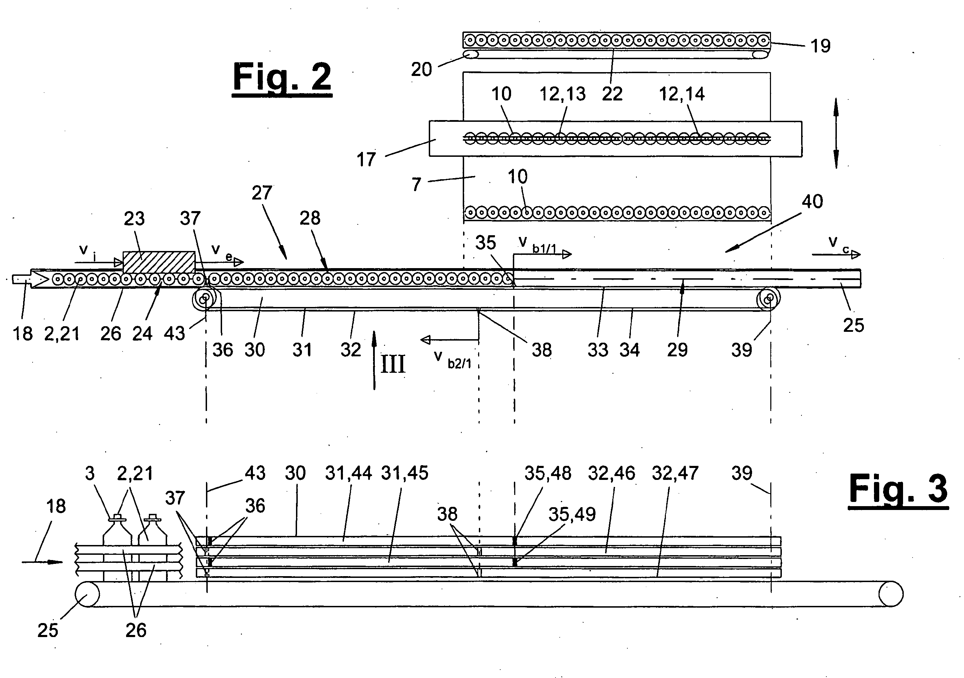

Im Strang (21) werden die Flaschen (2) z.B. eng aneinander mit gegenseitigen Berührungskontakt und in einer Reihe hintereinander in einer konstanten, unterbrechungsfreien Förderbewegung transportiert. Der Strangförderer (25) kann an ein oder mehreren Stellen eine Vereinzelungsvorrichtung (23) aufweisen, die z.B. ähnlich wie bei der DE 201 08 401 U1 ausgebildet ist und eine längs der Förderrichtung (18) angeordnete und drehend angetriebene Schnecke mit in Förderrichtung sich vergrößernder Teilung zur Bildung von axialen Abständen (24) zwischen den Flaschen (2) aufweist. Figur 2 zeigt diese abstandsbildende Funktion.

In der Flaschenbehandlungsanlage (4) ist mindestens eine Umsetzeinrichtung (1) vorhanden, mit der Flaschen (2) aus dem laufenden Strang (21) in Form von Flaschenreihen (10) entnommen und auf einen in einer Ladeposition (9) bereit stehenden Tray (7) umgesetzt werden können. Alternativ erlaubt die Umsetzeinrichtung (1) einen umgekehrten Umsetzvorgang, bei dem Flaschen (2) in kompletten Flaschenreihen (10) oder in Teilreihen (41,42) aus einem Tray (7) in den laufenden Strang (21) umgesetzt und dort eingeschleust werden.

Wie Figur 1 verdeutlicht, können der Flaschenförderer (25) und der Strang (21) bzw. die Förderbahn (5) durch die Umsetzeinrichtung (1) hindurch laufen, so dass die Umsetzvorgänge stets aus dem laufenden Strang (21) heraus oder in diesen hinein erfolgen.

Figur 13 zeigt eine Variante, in der z.B. eine offene Förderbahn (5) von einem Flaschenerzeuger (nicht dargestellt), z.B. einer Blasmaschine zum Herstellen von Kunststoff-Flaschen, zu einer Füllanlage (nicht dargestellt), führt. Die Umsetzeinrichtung (1) ist in diesem Ausführungsbeispiel über einen Bypass oder eine Nebenbahn (52) an die Hauptbahn (54) über ein oder mehrere schaltbare Weichen (53) angeschlossen. Im Normalbetrieb bewegen sich die Flaschen (2) auf der Hauptbahn (54) in Förderrichtung (18) und an der Umsetzeinrichtung (1) vorbei. Wenn ein Ausschleusen oder Einschleusen von Flaschen (2) aus dem Strang (21) stattfinden soll, wird durch eine Weichenbetätigung der Strang (21) auf den Bypass (52) ausgeleitet und durch die Umsetzeinrichtung (1) geleitet sowie anschließend wieder zur Hauptbahn (54) zurück geführt. Die Greifeinrichtung (1) kann in beiden Ausführungsbeispielen von Figur 1 und 13 die gleiche Ausbildung haben.

Die Umsetzeinrichtung (1) weist einen Reihenumsetzer (11) mit einer Greifeinrichtung (12) für mindestens eine Flaschenreihe (10) auf. Wenn der Reihenumsetzer (11) einen einzelnen Strang (21) bedient, fasst die Greifeinrichtung (12) eine einzelne Flaschenreihe (10). Werden mehrere parallele Stränge (21) bedient, kann die Greifeinrichtung (12) entsprechend mehrere Flaschenreihen (10) greifen.

Der Reihenumsetzer (11) besitzt einen Manipulator (15) zum Bewegen der Greifeinrichtung (12). In der gezeigten Ausführungsform ist dies ein Portalroboter (15) mit ein oder mehreren translatorischen Achsen, der z.B. ein portalartiges Gestell (16) mit einer daran quer zur Förderrichtung (18) verfahrbaren, hochliegenden Traverse (17) mit der daran hängend angeordneten Greifeinrichtung (12) besitzt. Die Greifeinrichtung (12) kann von beliebig geeigneter Art sein und fasst die Flaschen (2) an einer geeigneten Stelle, insbesondere an einem Kragen (3) im Kopfbereich. Die Greifeinrichtung (12) kann gemäß Figur 2 in der Länge in zwei oder mehr einzeln steuerbare Greiferbereiche (13,14) unterteilt sein, mit denen Teilreihen (41,42) einer Flaschenreihe (10) gegriffen und umgesetzt werden können. In der bevorzugten Ausführungsform ist die Greifeinrichtung (12) als Reihengreifer ausgebildet, der die aufgereihten Flaschen mit Greifbacken oder dergl. seitlich fasst. Alternativ können andere Greifelemente, wie Saugtulpen oder dergl. verwendet werden.

Die Umsetzeinrichtung (1) weist ferner eine Stauvorrichtung (27) auf, die dem Strangförderer (25) zugeordnet ist und die zur temporären Bildung und Abgrenzung von gestauten Flaschenpulks (28) und von Lücken (29) im laufenden Strang (21) dient. Mit der Stauvorrichtung (27) kann außerdem der gebildete Flaschenpulk (28) entlang des Strangförderers (25) mit einer von der Strangfördergeschwindigkeit abweichenden Geschwindigkeit transportiert werden. Die Stauvorrichtung (27) kann insbesondere den Flaschenpulk .(28) an beiden Enden fassen, als Pulk eigenständig transportieren und mit wechselnden Geschwindigkeiten antreiben, die zeitweise niedriger und zeitweise höher als die Strangfördergeschwindigkeit sein können. Die Flaschen (2) im Flaschenpulk (28) werden dabei schleifend über den Strangförderer (25) bewegt.

Die Stauvorrichtung (27) ist z.B. neben dem Strangförderer (25) und im Bereich des Reihenumsetzers (11) angeordnet. Dies hat Vorteile für die sichere Erfassung und Führung der Flaschen (2) bei wechselnden Fördergeschwindigkeiten. Über die Flaschenhöhe gibt es auch mehr Platz zum Erfassen, wobei sich außerdem mehrere höhenversetzte Angriffstellen bieten. Die Stauvorrichtung (27) kann alternativ an anderer Stelle, z.B. unter dem Strangförderer (25) angeordnet sein.

Die Stauvorrichtung (27) reicht in Förderrichtung (18) mindestens bis zum hinteren Ende des Trays (7). In Gegenrichtung erstreckt sich die Stauvorrichtung (27) über den Reihenumsetzer (11) hinaus und hat somit eine größere Länge als die umzusetzende Flaschenreihe (10). In Förderrichtung (18) vor der Stauvorrichtung (27) ist eine der vorstehend beschriebenen Vereinzelungsvorrichtung (23) angeordnet.

Die Stauvorrichtung (27) besitzt mehrere in den Strang (21) einbringbare und zwischen die Flaschen (2) im laufenden Strang greifende Halter (35,36,37,38), die mittels einer Transportvorrichtung (30) in Förderrichtung (18) reversierend oder umlaufend beweglich sind. Die Halter (35,36,37,38) greifen vorzugsweise in die Abstände (26) zwischen den Flaschen (2). Die Transportvorrichtung (30) kann mit variablen Geschwindigkeiten angetrieben werden und auch stehen bleiben.

Erfindungsgemäß. ist die Transportvorrichtung (30) als seitlich umlaufender Bandförderer mit vertikalen Umlenkachsen (39,43) ausgebildet, von denen die in Förderrichtung (18) vorn liegende Umlenkachse (43) eine Masterachse ist, die mit der Steuerung (50) der Umsetzeinrichtung (1) signaltechnisch verbunden ist und über deren Bewegungen die nachfolgenden Funktionsabläufe gesteuert werden.

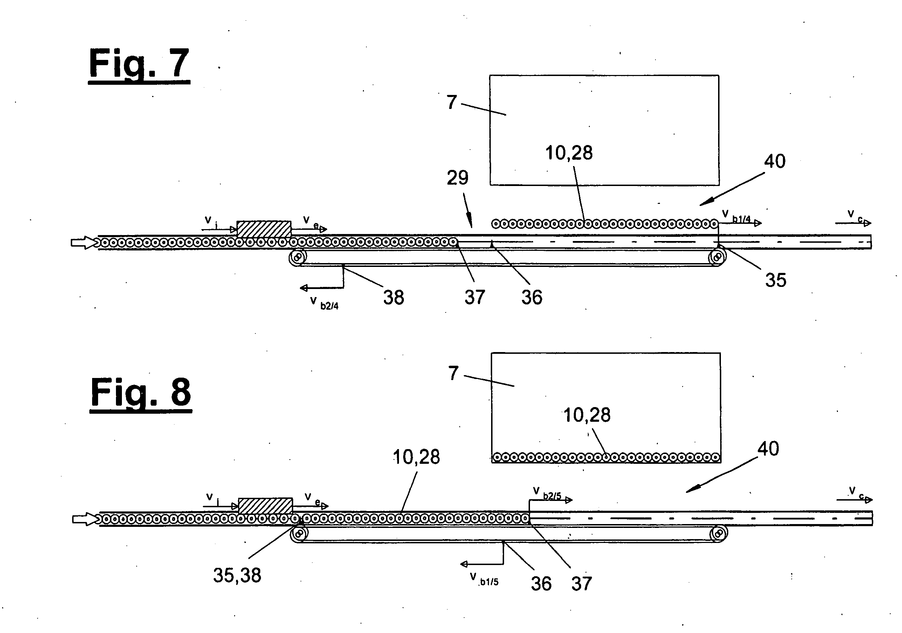

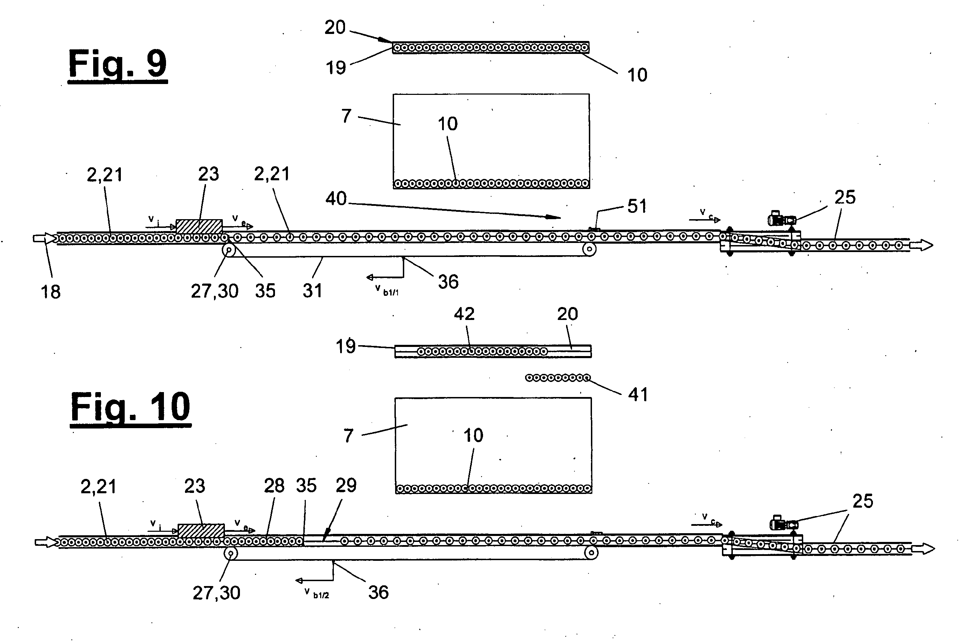

In der in Figur 2 bis 8 gezeigten Ausführungsbeispielen hat der Bandförderer z.B. zwei in Achsrichtung übereinander angeordnete Umlaufbänder oder Bandgruppen (31,32), die getrennt voneinander geführt und angetrieben sind und die sich mit untereinander variablen Geschwindigkeiten bewegen können. In der Variante von Figur 9 bis 12 kann der Bandförderer ein einzelnes Umlaufband bzw. eine einzelne Umlaufgruppe (31) aufweisen, wobei zusätzlich ein Stopper (51) am Strangförderer (25) vorhanden sein kann. Diese Variante ist nicht Teil der Erfingung.

Figur 3 verdeutlicht die Ausgestaltung der ersten Förderervariante mit zwei Bandgruppen (31,32). Beide Bandgruppen (31,32) bestehen jeweils aus zwei parallelen Teilbändern (44,45) und (46,47), die in Achsrichtung übereinander angeordnet sind. Die zu einer Bandgruppe. (31,32) gehörigen Teilbänder (44,45) und (46,47) werden gemeinsam angetrieben und bewegt. Die Antriebe sind mit der Steuerung (50) verbunden und der Übersicht halber nicht dargestellt. Die Teilbänder (44,45) und (46,47) sind gruppenüberkreuzend übereinander angeordnet, wobei z.B. in Figur 3 von den vier übereinander angeordneten Teilbändern von oben nach unten gesehen die an erster und dritter Stelle angeordneten Teilbänder (45,45) zur ersten Bandgruppe (31) gehören. Das dazwischenliegende Teilband (46) und das unterste Teilband (47) gehören zur zweiten Bandgruppe (32).

An den Umlaufbändern oder Bandgruppen (31,32) sind mehrere Halter (35,36,37,38) starr und ggf. verstellbar angeordnet. Zum Beispiel sind jeweils zwei Halter (35,36) und (37,38) mit einem Abstand in Umlaufrichtung an ihrem Umlaufband (31,32) angeordnet, welcher der Länge eines Flaschenpulks (28) und der hiervon gebildeten Flaschenreihe (10) entspricht. Im Pulk und in der Flaschenreihe (10) stehen die Flaschen (2) eng und vorzugsweise mit gegenseitiger Berührung hintereinander in Förderrichtung (18). Die Halter (35,36) und (37,38) sind als seitlich vom Umlaufband (31,32) abstehende, schmale, finger- oder blattförmige Mitnehmer ausgebildet, die beim Umfahren der Achse (43) zwischen die Flaschen (2) im laufenden Strang (21) und insbesondere in die Abstände (24) greifen können.

Das Fördertrum (33) der Umlaufbänder oder Bandgruppen (31,32) ist parallel und in unmittelbarer Nähe zum laufenden Strang (21) angeordnet. Das Leertrum (34) ist seitlich distanziert. Nach Umrunden der in Förderrichtung (18) vorderen Achse (43) gelangen die nach außen abstehenden Halter (35,36,37,38) in einer Schwenkbewegung in die Laufbahn des Strangs (21). Bei Umrunden der hinteren Achse (39) treten sie wieder außer Eingriff mit dem Strang (21). Die Dicke der Mitnehmer ist auf die Kontur der Flaschen (2) und die evtl. gebildeten Abstände (24) abgestimmt. Bei den Bandgruppen (31,32) mit jeweils zwei oder mehr Teilbändern (44,45,46,47) sind die Mitnehmer (35,36,37,38) in jeweils zwei oder mehr Mitnehmerfahnen (48, 49) unterteilt, die in Achsrichtung übereinander angeordnet sind. Durch die gruppenüberkreuzende Anordnung der Teilbänder (44,45,46,47) können die Mitnehmerfahnen (48,49) einander gruppenweise überholen und relativ zueinander bewegen. Außerdem können zwei Mitnehmer bzw. ihre vier Mitnehmerfahnen (48,49) gemeinsam an einer Stelle zwischen die Flaschen (2) im Strang (21) greifen, wie dies z.B. an der linken Achse (43) in Figur 2 dargestellt ist. In den Zeichnungen sind die Bandgruppen (31,32) der Übersicht halber seitlich versetzt zueinander in den Draufsichten dargestellt.

Die Stauvorrichtung (27) weist an ihrem rückwärtigen Ende des Reihenumsetzer eine Übersetzzone (40) auf, die auf gleicher Höhe und seitlich neben dem Tray (7) liegt. In der Übersetzzone (40) kann ein zum Umsetzen vorgesehener Flaschenpulk (28) zur Übergabe an den Reihenumsetzer (11) zeitweise ruhend positioniert werden. Desgleichen kann an der Übersetzzone (40) eine Lücke (29) im laufenden Strang (21) zum Einsetzen einer Flaschenreihe (10) oder Teilreihe (41,42) gebildet werden.

Wie Figur 1, 2 und 13 verdeutlichen, kann seitlich neben dem Tray (7) bzw. der Ladeposition (9) und vorzugsweise in Förderrichtung (18) auf gleicher Höhe eine Abstelleinrichtung (19) für mindestens eine Flaschenreihe (10) angeordnet sein. Die Abstelleinrichtung (19) besitzt eine seitliche Führung (22) für die aufgereihten Flaschen (2). Sie kann außerdem einen Flaschenförderer (20) aufweisen, der z.B. als Umlaufband ausgebildet ist, auf dem die Flaschen (10) ebenfalls in Förderrichtung (18) stehend transportiert werden können. Am förderseitig hinteren Ende ist ein Anschlag an der Führung (22) vorhanden, der die geförderten Flaschen stoppt und aufstaut.

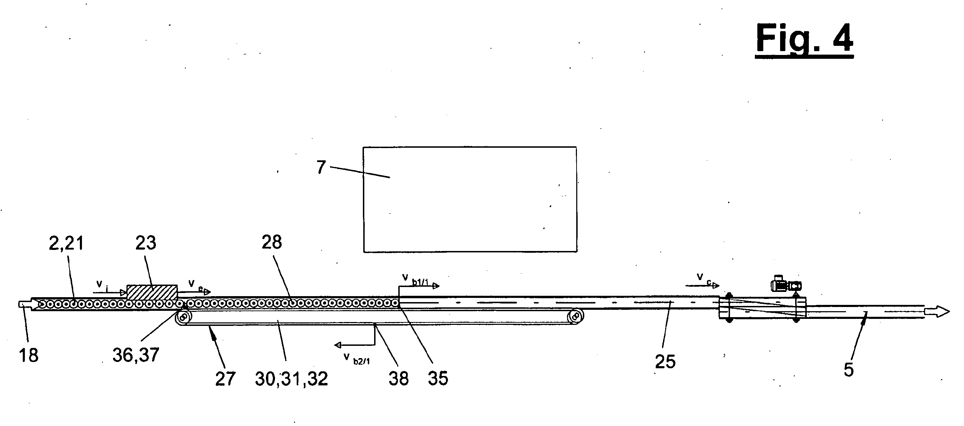

Die Umsetzfunktionen werden nachfolgend anhand der Figuren 4 bis 8 und 9 bis 12 erläutert.

In der Variante von Figur 4 bis 8 sollen Flaschenreihen (10) aus dem laufenden Strang (21) auf den bereit stehenden Tray (7) umgesetzt werden. Eine Flaschenreihe (10) ist hierbei z.B. so lang wie der Aufnahmebereich auf dem Tray (7), wobei der Tray (7) mehrere Flaschenreihen nebeneinander aufnehmen kann. Alternativ können die Länge einer Flaschenreihe und die Länge eines Trays auch unterschiedlich sein. Der aufgestaute Flaschenpulk (28) entspricht in der dargestellten Ausführungsform der Länge einer Flaschenreihe (10). Auch hier können alternativ Längenunterschiede bestehen.

Wie Figur 4 verdeutlicht greifen der vordere Halter (35) bzw. seine Mitnehmerfahnen (48,49) des einen Umlaufbands bzw. der Bandgruppe (31) vor die erste Flasche (2) im aufzustauenden Pulk (28). Der Halter (35) bewegt sich dabei mit seiner Bandgruppe (31) in Förderrichtung (18) langsamer als der Strang (21), so dass die zunächst von der Schnecke (23) gebildeten Flaschenabstände (24) wieder aufgehoben und die Flaschen im Pulk (28) gestaut werden. Sobald der Flaschenpulk (28) die vorgesehene Länge erreicht hat, tritt der hintere Halter (36) in Eingriff und hintergreift die letzte Flasche (2) im Pulk (28). Figur 4 zeigt diese Anordnung.

Zugleich kann der erste Halter (37) der zweiten Bandgruppe (32) vor die nächstfolgende Flasche (2) im ankommenden Strang (21) greifen.

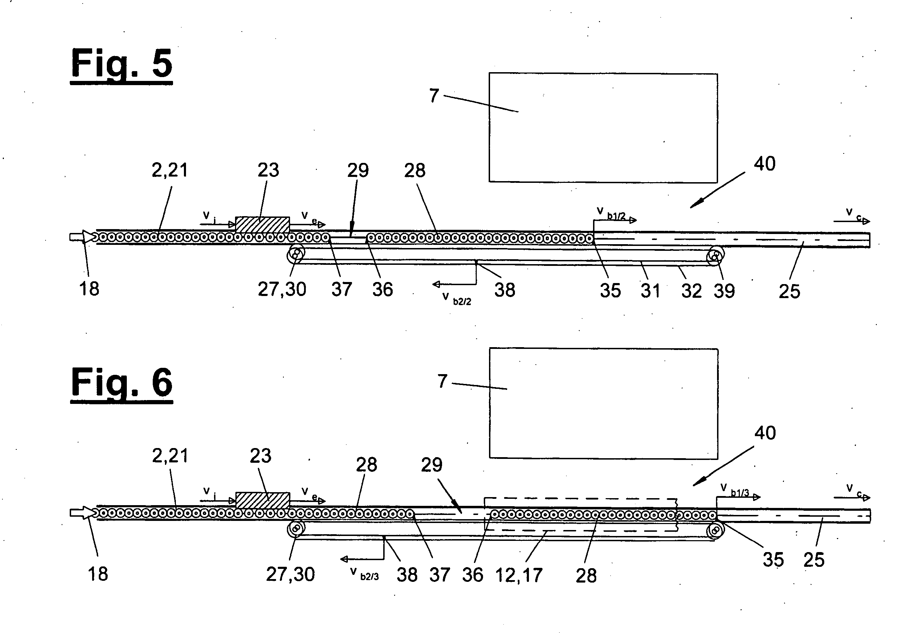

Der nun zwischen den Halter (35,36), gebildete und abgegrenzte Flaschenpulk (28) kann nun durch eine beschleunigte Förderbewegung der Bandgruppe (31) in Förderrichtung (18) vorwärts bewegt werden, wobei der erste Halter (37) der anderen Bandgruppe (32) langsamer läuft und mit dem Aufstauen des nächsten Flaschenpulks (28) beginnt. Zwischen den beiden Flaschenpulks und den Haltern (36,37) entsteht durch die unterschiedlichen Fördergeschwindigkeiten eine Lücke (29). Figur 5 zeigt diese Anordnung.

Der erste gebildete Flaschenpulk (28) wird mit der erwähnten Beschleunigung bis in die Umsetzzone (40) transportiert und hier durch einen Stopp der Bandgruppe (31) angehalten, während der Flaschenförderer (25) unter dem Flaschenpulk (28) weiterläuft. In dieser temporär ruhenden Position können der Flaschenpulk (28) bzw. die Flaschenreihe (10) vom Reihenumsetzer (11) mit der über der Umsetzzone (40) positionierten Traverse (17) und von der abgesenkten Greifeinrichtung (12) erfasst werden. Durch einen Relativhub, z.B. einen Aufwärtshub, wird die Flaschenreihe (10) vom Flaschenförderer (25) abgehoben, durch ein Verfahren der Traverse (17) über der vorgesehenen Ladestelle am Tray (7) positioniert und zur Flaschenabgabe am Tray (7) abgesenkt. Der Reihenumsetzer (11) fährt dann wieder zurück in die Umsetzzone (40) zur Aufnahme des nächsten Flaschenpulks (28).

Der Relativhub kann alternativ ein anderer sein. Er kann z.B. ein Seitenhub sein, mit dem die Flaschenreihe (10) vom Flaschenförderer (25) seitlich abgeschoben wird. Durch die Bildung der Lücken (29) zwischen den Flaschenpulks (28) besteht genügend Zeit zum Greifen und Abheben, Abschieben oder anderweitige Bewegen des gestoppten Flaschenpulks (28). Die Länge der Stauvorrichtung (27) ist so bemessen, dass die gewünschten kinematischen Funktionen erreicht werden können.

Figur 6 bis 8 verdeutlichen die vorerwähnte Umsetzfunktion der Flaschenreihe (10) auf den Tray (7) und zeigen außerdem das Einlaufen des nächsten beschleunigt vorwärts bewegten Flaschenpulks (28) in die Umsetzzone (40).

Wenn der Flaschenpulk (28) von der Bandgruppe (31) entladen ist, wird der erste Halter (35) mit einer solchen erhöhten Geschwindigkeit vorwärts bewegt und mit dem hinteren Halter (38) der zweiten Bandgruppe (32) synchronisiert, dass beide gemeinsam nach Umfahren der Achse (43) in Eingriff am Strang (21) treten. Der vorbeschriebene Zyklus beginnt dann von neuem.

Figur 9 bis 12 verdeutlichen das Zurücksetzen von Flaschenreihen (10) aus dem Tray (7) in den laufenden Strang (21). Die Flaschenreihen (10) können als Komplettreihen oder als Teilreihen (41,42) umgesetzt werden. In Variation der vorbeschriebenen Konstruktion kann außerdem die Transporteinrichtung (30) nur ein Umlaufband (31) mit zwei Haltern (35,36) und außerdem den Stopper (51) am Ende der Umsetzzone (40) aufweisen. Diese Konstruktion ist nicht Teil der Erfindung.

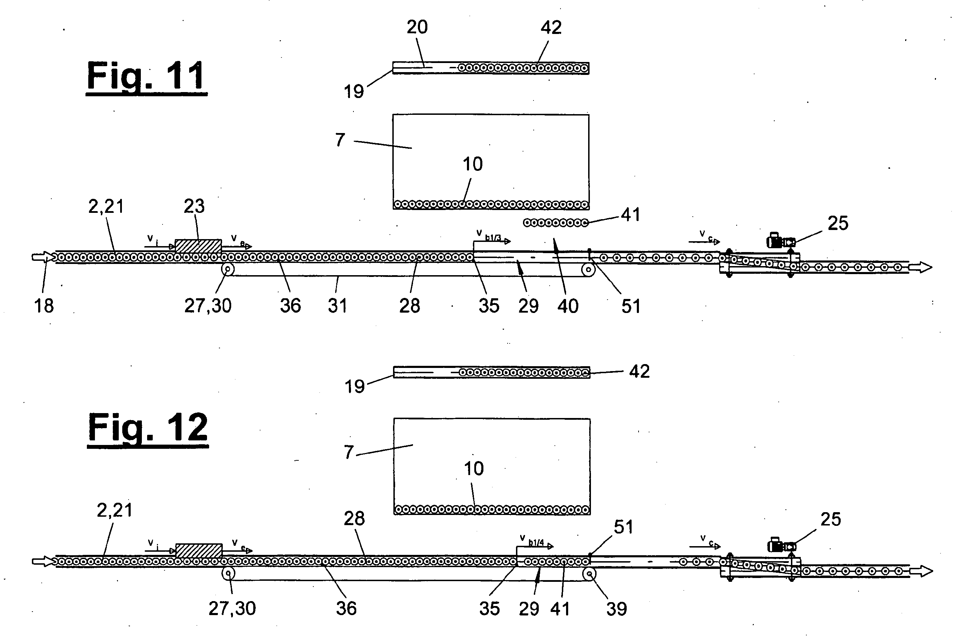

Figur 9 verdeutlicht die Situation, in der der Reihenumsetzer (11) (nicht dargestellt) zunächst eine Flaschenreihe (10) auf die Abstelleinrichtung (19) umgesetzt hat und nun bereit steht, die komplette Flaschenreihe (10) oder mehrere Teilreihen (41,42) aus der abgestellten Flaschenreihe (10) zu greifen und in Lücken (29) im Strang (21) einzusetzen, die von der Stauvorrichtung (27) gebildet werden. Figur 9 verdeutlicht den Beginn der Staubildung, wobei der Stopper (51) offen ist und der erste Halter (35) zwischen zwei Flaschen (2) im Strang (21) greift. Der Halter (35) bewegt sich dabei mit dem Umlaufband (31) in Förderrichtung (18) langsamer als der Strangförderer (25) und bildet einen aufgestauten Flaschenpulk (28), wobei außerdem eine Lücke (29) gegenüber der letzten mit Stranggeschwindigkeit weglaufenden Flasche (2) entsteht. Figur 10 zeigt diesen Zwischenschritt. Die Lücke (29) vergrößert sich über den weiteren Weg und gelangt der Umsetzzone (40). Die Greifeinrichtung (12) hat mit dem in Förderrichtung (18) vorn liegenden und einzeln steuerbaren Greiferbereich (14) (vgl. Figur 2) eine Teilreihe (41) gegriffen und bewegt diese gemäß Figur 11 und 12 zur Förderbahn des Strangs (21) und setzt sie im Bereich der Lücke (29) auf dem Strangförderer (25) ab. Der eingeschwenkte Stopper (51) hält die Flaschen und die Teilreihe (41) beim Absetzen und sichert sie gegen Umfallen. Nach Freigabe der Teilreihe (41) und rechtzeitig vor Ankunft des aufgestauten Flaschenpulks (28) öffnet der Stopper (51), so dass die Teilreihe (41) mit dem Strang (21) abtransportiert werden kann. Anschließend treten beide Halter (35,36) außer Eingriff mit dem Strang (21) und geben der temporär zur Lückenbildung geschaffenen Flaschenpulk (28) frei, so dass auch der Flaschenpulk (28) in Förderrichtung (18) ablaufen kann. Der erste Halter (35) kehrt dann durch eine ggf. beschleunigte Umlaufbewegung zurück in die Ausgangsposition gemäß Figur 9 zur Bildung eines neuen Flaschenpulks (28) und einer neuen Lücke (29). Der beschriebene Vorgang wiederholt sich, wobei von der Absetzeinrichtung (19) die zweite Teilreihe (42) gegriffen, umgesetzt und in den Strang (21) eingeschleust wird. Der Flaschenförderer (20) hat hierbei die Teilreihe (42) in Förderrichtung (18) nach vorn und in Anschlagposition bewegt, so dass mit dem vorderen Greiferbereich (14) die nächste Teilreihe gegriffen und umgesetzt werden kann. Die korreliert mit der Lage der Lücke (29) im Bereich der Umsetzzone (40).

In Variation zur Figur 9 bis 12 kann für dieses Einschleusen von Flaschenreihen (10) oder Teilreihen (41,42) auch die eingangs beschriebene Stauvorrichtung (27) mit den beiden Umlaufbändern oder Bandgruppen (31,32) eingesetzt werden. In diesem Fall kann der Bandstopper (51) entfallen. Durch die getrennt antreibbaren Bandgruppen (31,32) und ihre Halter (35,36) und (37,38) können zwischen den bandweise gebildeten Flaschenpulks (28) ausreichend große Lücken zum Einschleusen von Teilreihen (41) geschaffen werden, wobei nach jedem Flaschenpulk (28) eine Teilreihe (41) mit einer der Lückenbildung entsprechenden Länge eingesetzt werden kann. Der jeweils hintere Halter (36,38) der Bandgruppen (31,32) kann nach Freigabe und Ablaufen seines Flaschenpulks (28) temporär stehenbleiben und die Funktion des Stoppers (51) als Anschlag zum sichern der eingeschleusten Teilreihe (41,42) gegen Umfallen übernehmen. Darüber hinaus besteht die Möglichkeit, dass der jeweils hintere Halter (36,38) nach dem Absetzen der Teilreihe (41,42) mit zunehmender Geschwindigkeit voranbewegt wird, wobei die abgesetzte Teilreihe (41,42) allmählich auf die Strangfördergeschwindigkeit beschleunigt wird. Hierbei kann eine Synchronisation beider Geschwindigkeiten erreicht werden, bevor der Halter (36,38) die hintere Achse (39) erreicht und die Teilreihe (41,42) freigibt. Die allmähliche Beschleunigung und die Synchronisation sind eine zusätzliche Sicherung gegen Umfallen der Flaschen (2).

Abwandlungen der gezeigten und beschriebenen Ausführungsformen sind in verschiedener Weise möglich. Die Transporteinrichtung (30) kann anstelle der Umlaufbänder (31,32) ein linearer und reversierend bewegter Antrieb sein, z.B. ein Zylinder der sich in Förderrichtung (18) vor und zurück bewegt. Diese Ausführungsform ist nicht Teil der Erfindung. Die Halter können in diesem Fall um die Kolbenstangenachse gesteuert schwenkbar ausgebildet sein, wobei sie in den Strang (21) greifen. Ein solcher linearer Zylinderantrieb kann auf ein oder beiden Seiten des Strangs (21) und seiner Förderbahn angeordnet sein, wobei in der doppelseitigen Anordnung die gleichen Funktionen wie bei den zwei Umlaufbändern bzw. Bandgruppen (31,32) erzielbar sind. In weiterer Abwandlung sind beliebige andere Ausgestaltungen der Transporteinrichtungen und der Halter möglich.

In der Ausführungsform von Figur 1 sind die Trays (7) in ein oder mehreren Lagern oder Puffern (6) neben der Umsetzeinrichtung (1) angeordnet und können über einen Förderer (8) in die Ladeposition (9) gebracht und hieraus wieder entfernt werden. Je nach Umsetzkinematik können leere und volle Trays (7) gewechselt werden.

In Abwandlung hierzu können die Trays nur kurzzeitig in der Ladeposition (9) angehalten werden, z.B. wenn mit ein oder mehreren Flaschenreihen (10) ein Tray (7) in einem Umsetzvorgang befüllt oder geleert werden kann. Ferner ist es möglich, die Trays (7) während des Umsetzvorgangs zu bewegen, wenn der Reihenumsetzer (11) hierfür eine entsprechende Zusatzachse für die temporäre Mitbewegung hat. Außerdem ist es möglich, die Flaschenreihen (10) beim Umsetzen nicht auf ein wannenförmiges Tray oder eine andere Aufnahmevorrichtung, sondern direkt auf einen Förderer abzusetzen. Mit der vorbeschriebenen Technik kann ein Umsetzen von Flaschen zwischen zwei Strangförderern gleicher oder ähnlicher Bauart mit ein oder mehreren Strängen erfolgen, wobei beiden Strangförderern eine Stauvorrichtung der vorbeschriebenen Art zugeordnet ist.

Abwandlungsfähig ist auch die Ausgestaltung des Reihenumsetzers (11) und anderer Komponenten der Umsetzeinrichtung (1). Der Manipulator (15) kann insbesondere als Gelenkarmroboter ausgebildet sein.

### BEZUGSZEICHENLISTE

- 1: Umsetzeinrichtung
- 2: Stückgut, Flasche
- 3: Kragen
- 4: Behandlungsanlage
- 5: Kreisbahn
- 6: Lager, Puffer
- 7: Ladeanordnung, Tray
- 8: Förderer, Trayförderer
- 9: Ladeposition
- 10: Stückgutreihe, Flaschenreihe
- 11: Reihenumsetzer
- 12: Greifeinrichtung
- 13: Greiferbereich
- 14: Greiferbereich
- 15: Manipulator, Portalroboter
- 16: Gestell
- 17: Traverse
- 18: Förderrichtung
- 19: Abstelleinrichtung
- 20: Förderer, Flaschenförderer
- 21: Strang
- 22: Führung
- 23: Vereinzelungsvorrichtung, Schnecke
- 24: Abstand
- 25: Strangförderer
- 26: Führung
- 27: Stauvorrichtung
- 28: gestauter Pulk, Flaschenpulk
- 29: Lücke, Freiraum
- 30: Transporteinrichtung
- 31: Umlaufband, Bandgruppe I
- 32: Umlaufband, Bandgruppe II
- 33: Fördertrum
- 34: Leertrum
- 35: Halter, Mitnehmer von Umlaufband I
- 36: Halter, Mitnehmer von Umlaufband I
- 37: Halter, Mitnehmer von Umlaufband II
- 38: Halter, Mitnehmer von Umlaufband II
- 39: Achse
- 40: Übersetzposition
- 41: Teilreihe
- 42: Teilreihe
- 43: Masterachse
- 44: Teilband Bandgruppe I oben
- 45: Teilband Bandgruppe I unten
- 46: Teilband Bandgruppe II oben
- 47: Teilband Bandgruppe II unten
- 48: Mitnehmerfahne oben
- 49: Mitnehmerfahne unten
- 50: Steuerung
- 51: Stopper
- 52: Bypass, Nebenbahn
- 53: Weiche
- 54: Hauptbahn

## Patentansprüche

1. Umsetzeinrichtung (1) für Stückgüter (2), insbesondere Flaschen, zwischen mindestens einem Strangförderer (25), auf dem die Stückgüter (2) in ein oder mehreren Strängen (21) kontinuierlich transportiert werden und einer stationären oder beweglichen Ladeanordnung, insbesondere einem Tray (7), zur Aufnahme von ein oder mehreren Stückgutreihen (10), wobei die Umsetzeinrichtung (1) einen Reihenumsetzer (11) mit einer Greifeinrichtung (12) für mindestens eine Stückgutreihe (10) und einen Manipulator (15) sowie eine Stauvorrichtung (27) zur temporären Bildung und Abgrenzung von gestauten Güterpulks (28) und von Lücken (29) im laufenden Strang (21) auf dem Strangförderer (25) und zum eigenständigen Transport des Güterpulks (28) entlang des Strangförderers (25) aufweist und wobei die Stauvorrichtung (27) mehrere in den Strang (21) einbringbare und in Förderrichtung (18) bewegliche Halter (35 - 38) zum Fassen der ersten und letzten Stückgüter (2) im Güterpulk (28) und eine mit variablen Geschwindigkeiten antreibbare Transportvorrichtung (30) für die Halter (35 - 38) aufweist, **dadurch gekennzeichnet, daß** die Transportvorrichtung als seitlich umlaufender Bandförderer mit zwei übereinander angeordneten Umlaufbändern oder Bandgruppen (31,32) ausgebildet ist.

2. Umsetzeinrichtung nach Anspruch 1, **dadurch gekennzeichnet, dass** die Stauvorrichtung (27) neben dem Strangförderer (25) und im Bereich des Reihenumsetzers (11) angeordnet ist, wobei die Stauvorrichtung (27) sich gegen die Förderrichtung (18) über den Reihenumsetzer (11) hinaus erstreckt.

3. Umsetzeinrichtung nach Anspruch 1 oder 2, **dadurch gekennzeichnet, dass** die Stauvorrichtung (27) im Bereich des Reihenumsetzers (11) eine Übersetzzone (40) aufweist, wobei in der Übersetzzone (40) ein zum Umsetzen vorgesehener Güterpulk (28) zur Übergabe an den Reihenumsetzer (11) zeitweise ruhend positionierbar ist oder in der Übersetzzone (40) durch Rückhalt des ankommenden Güterpulks (28) eine Lücke (29) im Strang (21) zum Einsetzen einer Stückgutreihe (10) oder einer Teilreihe (41,42) bildbar ist.

4. Umsetzeinrichtung nach Anspruch 1, 2 oder 3, **dadurch gekennzeichnet, dass** der Strangförderer (25) eine Vereinzelungsvorrichtung (23) aufweist, die in Förderrichtung (18) vor der Stauvorrichtung (27) angeordnet ist und die Stückgüter (2) im laufenden Strang (21) unter Bildung von Abständen (24) distanziert.

5. Umsetzeinrichtung nach Anspurch 4, **dadurch gekennzeichnet, dass** die Vereinzelungsvorrichtung (23) als Schnecke ausgebildet ist.

6. Umsetzeinrichtung nach einem der vorhergehenden Ansprüche, **dadurch gekennzeichnet, dass** die Umlaufbänder oder Bandgruppen (31,32) getrennt und mit untereinander variablen Geschwindigkeiten antreibbar sind.

7. Umsetzeinrichtung nach einem der vorhergehenden Ansprüche, **dadurch gekennzeichnet, dass** an den Umlaufbändern oder Bandgruppen (31,32) jeweils zwei Halter (35,36 und 37,38) mit einem der Pulklänge entsprechenden Abstand angeordnet sind

8. Umsetzeinrichtung nach einem der vorhergehenden Ansprüche, **dadurch gekennzeichnet, dass** die Halter (35,36,37,38) als seitlich vom Umlaufband (31,32) abstehende, schmale, finger- oder blattförmige Mitnehmer ausgebildet sind.

9. Umsetzeinrichtung nach einem der vorhergehenden Ansprüche, **dadurch gekennzeichnet, dass** die Bandgruppen (31,32) jeweils in zwei oder mehr Teilbänder (44 - 47) und die Mitnehmer (35,36,37,38) in jeweils zwei oder mehr Mitnehmerfahnen (48,49) unterteilt sind.

10. Umsetzeinrichtung nach Anspurch 9, **dadurch gekennzeichnet, dass** die Teilbänder (44 - 47) gruppenüberkreuzend übereinander angeordnet sind.

11. Umsetzeinrichtung nach einem der vorhergehenden Ansprüche, **dadurch gekennzeichnet, dass** die Umsetzeinrichtung (1) neben der Ladeanordnung (7) eine Abstelleinrichtung (19) mit einem Förderer (20) zur temporären Aufnahme einer umzusetzenden Reihe (10) aufweist.

12. Umsetzeinrichtung nach einem der vorhergehenden Ansprüche, **dadurch gekennzeichnet, dass** die Greifeinrichtung (12) des Reihenumsetzers (11) mehrere getrennt steuerbare Greiferbereiche (13,14) zum Fassen von Teilreihen (41,42) aufweist.

13. Umsetzeinrichtung nach einem der vorhergehenden Ansprüche, **dadurch gekennzeichnet, dass** die Umsetzeinrichtung (1) eine Steuerung (50) mit einer der Stauvorrichtung (27) zugeordneten Masterachse (43) aufweist.

14. Behandlungsanlage für Stückgüter (2), insbesondere Flaschen, mit mindestens einem Strangförderer (25), auf dem die Stückgüter (2) in ein oder mehreren Strängen (21) kontinuierlich transportiert werden und einer stationären oder beweglichen Ladeanordnung, insbesondere einem Tray (7), zur Aufnahme von ein oder mehreren Stückgutreihen (10), wobei die Behandlungsanlage (4) mindestens eine Umsetzeinrichtung (1) mit einem Reihenumsetzer (11) mit einer Greifeinrichtung (12) für mindestens eine Stückgutreihe (10) und einen Manipulator (15) aufweist, **dadurch gekennzeichnet, dass** die Umsetzeinrichtung (1) nach einem der Ansprüche 1 bis 13 ausgebildet ist.

15. Behandlungsanlage nach Anspruch 14, **dadurch gekennzeichnet, dass** die Behandlungsanlage (4) mindestens ein Lager (6) für ein oder mehrere Trays (7) aufweist, das durch einen Trayförderer (8) mit einer Ladeposition (9) im Bereich der Umsetzeinrichtung (1) verbunden ist.

16. Verfahren zum Umsetzen von Stückgütern (2), insbesondere Flaschen, zwischen mindestens einem Strangförderer (25), auf dem die Stückgüter (2) in ein oder mehreren Strängen (21) kontinuierlich transportiert werden und einer stationären oder beweglichen Ladeanordnung, insbesondere einem Tray (7), zur Aufnahme von ein oder mehreren Stückgutreihen (10), wobei die Stückgüter (2) mit einer Umsetzeinrichtung (1) umgesetzt werden, welche einen Reihenumsetzer (11) mit einer Greifeinrichtung (12) für mindestens eine Stückgutreihe (10) und einen Manipulator (15) aufweist, wobei mittels einer Stauvorrichtung (27) temporär gestaute Güterpulks (28) und Lücken (29) im laufenden Strang (21) auf dem Strangförderer (25) gebildet und abgegrenzt werden und die Güterpulks (28) entlang des Strangförderers (25) eigenständig transportiert werden und wobei die ersten und letzten Stückgüter (2) im Güterpulk (28) von mehrere in den Strang (21) einbringbaren und in Förderrichtung (18) beweglichen und mit variablen Geschwindigkeiten angetriebenen Haltern (35 - 38) einer Transportvorrichtung (30) gefasst werden, die als seitlich umlaufender Bandförderer mit zwei übereinander angeordneten Umlaufbändern oder Bandgruppen (31,32) ausgebildet ist.

## Claims

1. Apparatus (1) for transferring articles (2), in particular bottles, between at least one line conveyor (25), on which the articles (2) are transported continuously in one or more lines (21), and a stationary or movable loading arrangement, in particular a tray (7), for accommodating one or more rows (10) of articles, wherein the transfer apparatus (1) has a row-transfer device (11) with a gripping means (12) for at least one row (10) of articles, and also has a manipulator (15) as well as an accumulating means (27) for temporarily forming and dividing off accumulated sets (28) of articles and gaps (29) in the continuous line (21) on the line conveyor (25), and for transporting the set (28) of articles independently along the line conveyor (25), and wherein the accumulating means (27) has a plurality of holders (35-38) which can be introduced into the line (21), can be moved in the conveying direction (18) and are intended for gripping the first and last articles (2) in the set (28) of articles, and also has a means (30) which is intended for transporting the holders (35-38) and can be driven at variable speeds, **characterized in that** the transporting means is designed in the form of laterally circulating belt conveyors with two circulating belts, or groups (31, 32) of belts, arranged one above the other.

2. Transfer apparatus according to Claim 1, **characterized in that** the accumulating means (27) is arranged alongside the line conveyor (25) and in the region of the row-transfer device (11), wherein the accumulating means (27) extends beyond the row-transfer device (11) in the direction counter to the conveying direction (18).

3. Transfer apparatus according to Claim 1 or 2, **characterized in that** the accumulating means (27) has a transition zone (40) in the region of the row-transfer device (11), wherein, in the transition zone (40), a transferable set (28) of articles can be positioned temporarily at rest for transfer to the row-transfer device (11) or, in the transition zone (40), by virtue of the incoming set (28) of articles being restrained, it is possible to form a gap (29) in the line (21) in order to insert a row (10) of articles or a sub-row (41, 42).

4. Transfer apparatus according to Claim 1, 2 or 3 **characterized in that** the line conveyor (25) has a separating means (23) which is arranged upstream of the accumulating means (27), as seen in the conveying direction (18), and spaces apart the articles (2) in the continuous line (21) at intervals (24).

5. Transfer apparatus according to Claim 4, **characterized in that** the separating means (23) is designed in the form of a worm.

6. Transfer apparatus according to one of the preceding claims, **characterized in that** the circulating belts or groups (31, 32) of belts can be driven separately and at speeds which are variable in relation to one another.

7. Transfer apparatus according to one of the preceding claims, **characterized in that** in each case two holders (35, 36 and 37, 38) are arranged on the circulating belts or groups (31, 32) of belts, at intervals corresponding to the length of a set of articles.

8. Transfer apparatus according to one of the preceding claims, **characterized in that** the holders (35, 36, 37, 38) are designed in the form of narrow, finger-like or tongue-like drivers projecting laterally from the circulating belt (31, 32).

9. Transfer apparatus according to one of the preceding claims, **characterized in that** the groups (31, 32) of belts are subdivided in each case into two or more sub-belts (44-47) and the drivers (35, 36, 37, 38) are subdivided into each case two or more driver lugs (48, 49).

10. Transfer apparatus according to Claim 9, **characterized in that** the sub-belts (44-47) are arranged one above the other such that they cross over in groups.

11. Transfer apparatus according to one of the preceding claims, **characterized in that** the transfer apparatus (1), alongside the loading arrangement (7), has a set-down means (19) with a conveyor (20) for temporarily accommodating a row (10) which is to be transferred.

12. Transfer apparatus according to one of the preceding claims, **characterized in that** the gripping means (12) of the row-transfer device (11) has a plurality of separately controllable gripper regions (13, 14) for gripping sub-rows (41, 42).

13. Transfer apparatus according to one of the preceding claims, **characterized in that** the transfer apparatus (1) has a controller (50) with a master axis (43) assigned to the accumulating means (27).

14. Installation for handling articles (2), in particular bottles, having at least one line conveyor (25), on which the articles (2) are transported continuously in one or more lines (21), and having a stationary or movable loading arrangement, in particular a tray (7), for accommodating one or more rows (10) of articles, wherein the handling installation (4) has at least one transfer apparatus (1) with a row-transfer device (11) with a gripping means (12) for at least one row (10) of articles, and also has a manipulator (15), **characterized in that** the transfer apparatus (1) is designed according to one of Claims 1 to 13.

15. Handling installation according to Claim 14, **characterized in that** the handling installation (4) has at least one store (6) which is intended for one or more trays (7)and is connected by a tray conveyor (8) to a loading position (9) in the region of the transfer apparatus (1).

16. Method of transferring articles (2), in particular bottles, between at least one line conveyor (25), on which the articles (2) are transported continuously in one or more lines (21), and a stationary or movable loading arrangement, in particular a tray (7), for accommodating one or more rows (10) of articles, wherein the articles (2) are transferred by a transfer apparatus (1) which has a row-transfer device (11) with a gripping means (12) for at least one row (10) of articles, and also has a manipulator (15), wherein an accumulating means (27) forms and divides off temporarily accumulated sets (28) of articles and gaps (29) in the continuous line (21) on the line conveyor (25) and transports the sets (28) of articles independently along the line conveyor (25), and wherein the first and last articles (2) in the set (28) of articles are gripped by a plurality of holders (35-38) which can be introduced into the line (21), can be moved in a conveying direction (18), are driven at variable speeds and belong to a transporting means (30), which is designed in the form of laterally circulating belt conveyors with two circulating belts, or groups (31, 32) of belts, arranged one above the other.

## Revendications

1. Dispositif (1) pour déplacer des pièces (2), notamment des bouteilles, entre au moins un transporteur (25) sur lequel les pièces (2) sont transportées de manière continue en une ou plusieurs lignes (21) et un ensemble stationnaire ou mobile de chargement, notamment un plateau (7), qui reprend une ou plusieurs rangées (10) de pièces,
le dispositif de déplacement (1) présentant un dispositif (11) de déplacement de rangées doté d'un dispositif de saisie (12) qui saisit au moins une rangée (10) de pièces et un manipulateur (15) ainsi qu'un accumulateur (27) qui forme et délimite temporairement dans la ligne (21) en déplacement sur le transporteur (25) des pelotons (28) de pièces accumulées ainsi que des intervalles (29) et qui transporte de manière autonome le peloton (28) de pièces le long du transporteur (25),
l'accumulateur (27) présentant plusieurs supports (35 - 38) aptes à se déplacer dans la direction de transport (18) et à être insérés dans la ligne (21), qui saisissent la première et la dernière pièce (2) du peloton (28) de pièces, et un dispositif (30) de transport des supports (35 - 38) apte à être entraîné à des vitesses variables,
**caractérisé en ce que**
le dispositif de transport est configuré comme transporteur à bandes sans fin accolées latéralement doté de deux bandes sans fin ou groupes (31, 32) de bandes sans fin disposés l'un au-dessus de l'autre.

2. Dispositif de déplacement selon la revendication 1, **caractérisé en ce que** l'accumulateur (27) est disposé à côté du transporteur (25) et au niveau du dispositif (11) de déplacement de rangées, l'accumulateur (27) s'étendant au-dessus du dispositif (11) de déplacement de rangées dans la direction opposée à la direction de transport (18).

3. Dispositif de déplacement selon les revendications 1 ou 2, **caractérisé en ce que** l'accumulateur (27) présente une zone de retournement (40) au niveau du dispositif (11) de déplacement de rangées, un peloton (28) de pièces destiné à être déplacé pouvant être immobilisé temporairement, dans la zone de retournement (40), pour transfert au dispositif (11) de déplacement de rangées ou un interstice (29) pouvant être formé dans la ligne (21), dans la zone de retournement (40), en retenant le peloton (28) de pièces qui arrivent, pour insérer une rangée (10) de pièces ou une partie (41, 42) de rangée.

4. Dispositif de déplacement selon les revendications 1, 2 ou 3, **caractérisé en ce que** le transporteur (25) présente un ensemble (23) de séparation des pièces une à une disposé en amont de l'accumulateur (27) dans la direction de transport (18) et qui écarte les pièces (2) les unes des autres à intervalles (24) dans la ligne (21) en déplacement.

5. Dispositif de déplacement selon la revendication 4, **caractérisé en ce que** l'ensemble (23) de séparation des pièces une à une est configuré en vis.

6. Dispositif de déplacement selon l'une des revendications précédentes, **caractérisé en ce que** les bandes sans fin ou groupes (31, 32) de bandes sans fin peuvent être entraînés séparément et à des vitesses variant les unes par rapport aux autres.

7. Dispositif de déplacement selon l'une des revendications précédentes, **caractérisé en ce que** deux supports respectifs (35, 36 et 37, 38) sont disposés à une distance qui correspond à la longueur des pelotons sur les bandes sans fin ou groupes (31, 32) de bandes sans fin.

8. Dispositif de déplacement selon l'une des revendications précédentes, **caractérisé en ce que** les supports (35, 36, 37, 38) sont configurés en forme d'entraîneurs étroits, en doigt ou en lame, débordant latéralement de la bande sans fin (31, 32).

9. Dispositif de déplacement selon l'une des revendications précédentes, **caractérisé en ce que** les groupes (31, 32) de bandes sans fin sont tous divisés en deux ou plusieurs bandes partielles (44 - 47) et les entraîneurs (35, 36, 37, 38) en deux ou plusieurs ailettes d'entraînement respectives (48, 49).

10. Dispositif de déplacement selon la revendication 9, **caractérisé en ce que** les bandes partielles (44 - 47) sont disposées les unes au-dessus des autres en groupes croisés.

11. Dispositif de déplacement selon l'une des revendications précédentes, **caractérisé en ce que** le dispositif de déplacement (1) présente à côté de l'ensemble de chargement (7) un dispositif de dépose (19) doté d'un transporteur (20) et reprenant une rangée (10) qui doit être déplacée.

12. Dispositif de déplacement selon l'une des revendications précédentes, **caractérisé en ce que** le dispositif de saisie (12) du dispositif (11) de déplacement de rangées présente plusieurs zones de saisie (13, 14) aptes à être commandées séparément pour saisir dans rangées partielles (41, 42).

13. Dispositif de déplacement selon l'une des revendications précédentes, **caractérisé en ce que** le dispositif de déplacement (1) présente une commande (50) dont l'axe maître (43) est associé à l'accumulateur (27).

14. Installation de traitement de pièces (2), notamment de bouteilles, présentant au moins un transporteur (25) sur lequel les pièces (2) sont transportées de manière continue en une ou plusieurs lignes (21) et un ensemble stationnaire ou mobile de chargement, notamment un plateau (7), qui reprend une ou plusieurs rangées (10) de pièces, l'installation traitement (4) présentant au moins
un dispositif de déplacement (1) présentant un dispositif (11) de déplacement de rangées doté d'un dispositif de saisie (12) qui saisit au moins une rangée (10) de pièces et un manipulateur (15), **caractérisée en ce que**
le dispositif de déplacement (1) est configuré selon l'une des revendications 1 à 13.

15. Installation de traitement selon la revendication 14, **caractérisée en ce que** l'installation traitement (4) présente au moins un appui (6) pour un ou plusieurs plateaux (7), le ou les appuis étant reliés par un transporteur (8) de plateaux à un emplacement de chargement (9) situé au niveau du dispositif de déplacement (1).

16. Procédé pour déplacer des pièces (2), notamment des bouteilles, entre au moins un transporteur (25) sur lequel les pièces (2) sont transportées de manière continue en une ou plusieurs lignes (21) et un ensemble stationnaire ou mobile de chargement, notamment un plateau (7), qui reprend une ou plusieurs rangées (10) de pièces,
dans lequel les pièces (2) sont déplacées à l'aide d'un dispositif de déplacement (1) qui présente un dispositif (11) de déplacement de rangées doté d'un dispositif de saisie (12) qui saisit au moins une rangée (10) de pièces et un manipulateur (15), des pelotons (28) de pièces accumulées ainsi que des intervalles (29) étant formés et délimités temporairement dans la ligne (21) en déplacement sur le transporteur (25) au moyen d'un accumulateur (27), les pelotons (28) de pièces étant transportés de manière autonome le long du transporteur (25), la première et la dernière pièce (2) des pelotons (28) de pièces étant saisies par plusieurs supports (35 - 38) d'un dispositif de transport (30), entraînés à des vitesses variables et aptes se déplacer dans la direction de transport (18) et à être insérés dans la ligne (21), le dispositif de transport étant configuré comme transporteur à bandes sans fin accolées latéralement et doté de deux bandes sans fin ou groupes (31, 32) de bandes sans fin disposés l'un au-dessus de l'autre.
